# EUROPEAN PATENT APPLICATION

(11) **EP 4 047 778 A1**
(43) Date of publication of application: **24.08.2022**
(21) Application number: 21158602.9
(22) Date of filing: 23.02.2021
(51) Int. Cl.: H02J 7/00

(54) **CC-CP-CV CHARGING OF LITHIUM-BASED BATTERIES**

(71) Applicant: Tridonic GmbH & Co KG, 6851 Dornbirn (AT)
(72) Inventor: de Menezes, Cristiano, 6850 Dornbirn (AT); Wilson, Ian, 6850 Dornbirn (AT); Hanlon, Neil, 6850 Dornbirn (AT)
(74) Representative: Rupp, Christian

(57) **Abstract**

Disclosed is a method (1) of operating a battery charger (2) for a Lithium-based battery (4) comprising a cell (401). The method (1) comprises: connecting (101) the battery (4) to a powered battery charger (2); responsive to a voltage (5, *V_{CELL}*) of the cell (401) being below a threshold voltage (501, *V_{T}*), applying (102) a constant charging current (601, *I_{CC}*) to the cell (401) until a charging power (*V_{CELL}·I_{CC}*) is equal to or above a target power (*V_{T}·I_{CC}*); applying (103) a charging current (6, *I_{CELL}*) lower than the constant charging current (601, *I_{CC}*) to the cell (401) until the voltage (5, *V_{CELL}*) of the cell (401) is equal to or above a maximum charging voltage (502, *V_{MAX}*); and applying (104) the maximum charging voltage (502, *V_{MAX}*) to the cell (401) until the charging current (6, *I_{CELL}*) is equal to or below a threshold current (602, *I_{T}*). This battery charging procedure reduces a worst-case charging power in relation to known CC-CV charging algorithms, relaxes power ratings of the electronic components of the battery charger (2), and provides a safer design having a prolonged lifetime.

## Description

### Technical Field

The present invention relates to charging of Lithium-based batteries, and in particular to a method of operating a battery charger for a Lithium-based battery, a corresponding battery charger, and an emergency power supply for an LED lighting system comprising a Lithium-based battery and a battery charger.

### Background Art

In the context of emergency lighting, rechargeable Lithium-based batteries have grown in popularity owing to high energy density, low self-discharge and absent memory effect.

Charging of Lithium-based batteries typically involves constant current - constant voltage (CC-CV) algorithms. When adopting the CC-CV approach, the charger electronics and consequently the emergency lighting product must be validated thermally at worst-case power conditions (i.e., at *Pₘₐₓ* = *Vₘₐₓ*·*Iₘₐₓ*). The electronic components are thus subject to high power ratings and high peak temperatures that shorten their lifetime.

### Summary of the Invention

The object of the present invention is to loosen a worst-case power condition of a battery charger for Lithium-based batteries.

The invention is defined by the appended independent claims. Preferred embodiments are set forth in the dependent claims and in the following description and drawings.

According to a first aspect of the present disclosure, a method of operating a battery charger is provided. The method is for a Lithium-based battery comprising a cell and comprises: connecting the battery to a powered battery charger; responsive to a voltage of the cell being below a threshold voltage , applying a constant charging current to the cell until a charging power is equal to or above a target power; applying a charging current lower than the constant charging current to the cell until the voltage of the cell is equal to or above a maximum charging voltage; and applying the maximum charging voltage to the cell until the charging current is equal to or below a threshold current.

In an implementation of the first aspect, the applying of the charging current lower than the constant charging current to the cell may comprise: applying a charging current decreasing in dependence of the voltage of the cell.

In an implementation of the first aspect, the applying of the charging current lower than the constant charging current to the cell may comprise: applying the target power to the cell.

In an implementation of the first aspect, the method may further comprise responsive to the voltage of the cell being equal to or below a further threshold voltage, triggering the applying of the charging current lower than the constant charging current to the cell.

In an implementation of the first aspect, the further threshold voltage may comprise 15/18, preferably 16/18, and most preferably 17/18 of the maximum charging voltage.

In an implementation of the first aspect, the constant charging current may depend on at least one of a minimum rated capacity of the battery, and a production tolerance of the minimum rated capacity.

In an implementation of the first aspect, the constant charging current may exceed a constant charging current of known CC-CV LFP battery chargers.

In an implementation of the first aspect, the threshold current may comprise 3/9, preferably 2/9, and most preferably 1/9 of the constant charging current.

In an implementation of the first aspect, the threshold voltage may comprise 24/27, preferably 22/27, and most preferably 20/27 of a maximum charging voltage of the maximum charging voltage.

In an implementation of the first aspect, the battery may comprise a number of stages in series each having a number of cells in parallel.

In an implementation of the first aspect, the target power may depend on the number of stages.

In an implementation of the first aspect, responsive to the voltage of the cell being equal to or below the threshold voltage, the charging current may be equal to or below the threshold current within a maximum recharge time defined by relevant standards, e.g. 24 hours.

In an implementation of the first aspect, the Lithium-based battery may comprise a Lithium ion cell or a Lithium ferro-phosphate cell.

According to a second aspect of the present disclosure, a battery charger for a Lithium-based battery comprising a cell is provided. The battery charger comprises: input terminals connectable to a source of electrical power; output terminals connectable to the battery; a power converter interconnecting the input terminals and the output terminals; and a controller unit. The controller unit is configured to measure a voltage of the cell, a charging current and a charging power of the battery. The controller unit is configured to, responsive to the voltage of the cell being below a threshold voltage , apply a constant charging current to the cell until the charging power is equal to or above a target power. The controller unit is configured to apply a charging current lower than the constant charging current to the cell until the voltage of the cell is equal to or above a maximum charging voltage. The controller unit is configured to apply the maximum charging voltage to the cell until the charging current is equal to or below a threshold current.

In an implementation of the second aspect, the controller unit may further be configured to carry out the method of the first aspect or any of its embodiments of operating the battery charger.

According to a third aspect of the present disclosure, an emergency power supply for an LED lighting system is provided. The emergency power supply comprises: a Lithium-based battery comprising a cell; and a battery charger of the second aspect or any of its embodiments.

### Advantageous Effects of the Invention

The present invention provides a method, a battery charger and an emergency power supply implementing a CC-CP-CV charging algorithm which, by applying a substantially constant power (CP), reduces a worst-case charging power in relation to known CC-CV charging algorithms. Accordingly, the electronic components of the battery charger are subjected to lower peak temperatures, may thus be selected in accordance with lower power ratings, and serve for a prolonged lifetime in a safer design. The CC-CP-CV charging regime is applicable to Lithium ferro-phosphate as well as other lithium-based batteries such as Lithium Titanate Oxide, Nickel Manganese Cobalt, Lithium Cobalt Oxide.

### Brief Description of the Drawings

Further aspects, advantages and objects of the invention will become evident for the skilled reader by means of the following detailed description of the embodiments of the invention, when taking into conjunction with the figures of the enclosed drawings.
FIG. 1 illustrates a flow diagram of a method according to a first aspect of the present disclosure;
FIG. 2 illustrates resultant curves of a voltage 5 and a current 6 of an exemplary battery 4 when carrying out the method 1 of FIG. 1.
FIG. 3 illustrates a battery charger according to a second aspect of the present disclosure, and an emergency power supply according to a third aspect of the present disclosure.

### Detailed Descriptions of Embodiments

The invention will now be described with respect to various embodiments. The features of these embodiments may be combined with each other unless specified otherwise.

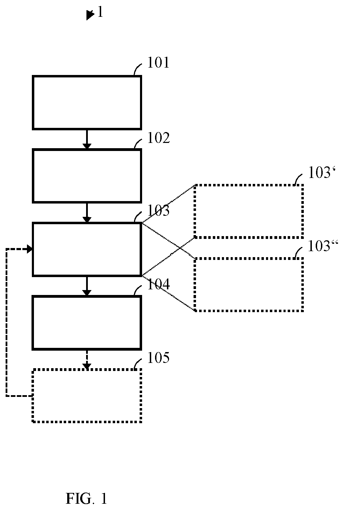

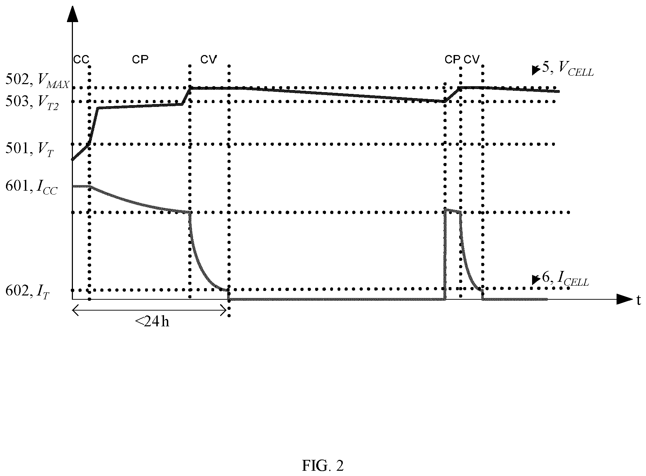

FIG. 1 illustrates a flow diagram of a method 1 according to a first aspect of the present disclosure, and FIG. 2 illustrates resultant curves of a voltage 5 and a current 6 of an exemplary battery 4 when carrying out the method 1 of FIG. 1.

The method 1 is for operating a battery charger 2 for a Lithium-based battery 4 comprising a cell.

The Lithium-based battery 4 may comprise a Lithium-ion cell or a Lithium ferro-phosphate (LFP) cell. The battery 4 may comprise a number S of stages in series each having a number P of cells in parallel. For example, common battery configurations comprise 2s1p, 2s2p, 3s1p or 3s2p, corresponding to *{S*=*2;P*=*1}, {S*=*2;P*=*2}, {S*=*3;P*=*1}* or *{S*=*3;P*=*2}*, respectively.

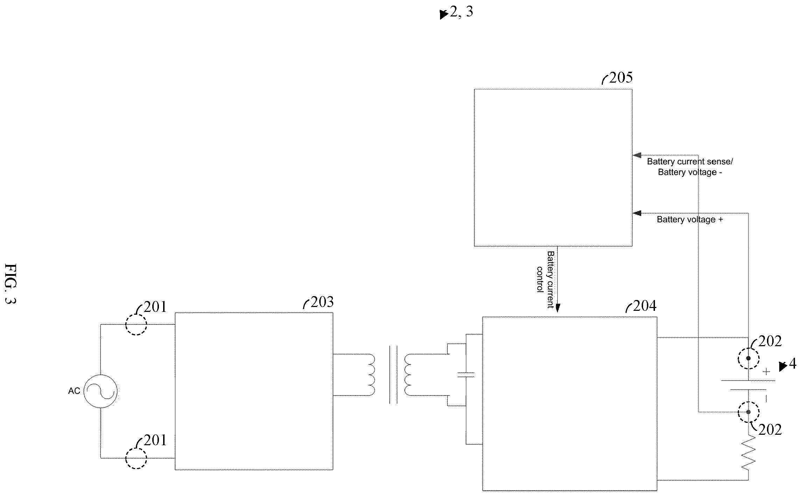

The method 1 comprises a step of connecting 101 the battery 4 to a powered battery charger 2, such as the one illustrated in FIG. 3 and explained in more detail below.

The method 1 further comprises, responsive to the voltage 5, *V_{CELL}* of the cell being below a threshold voltage 501, *V_{T}*, a step of applying 102 a constant charging current 601, *I_{CC}* to the cell until a charging power *V_{CELL}*·*I_{CC}* is equal to or above a target power *V_{T}*·*I_{CC}.* This may also be taken from the CC charging phase indicated in FIG. 2, where the applied constant charging current 601, *Icc* results in a rising voltage 5, *V_{CELL}* of the cell until the voltage 5, *V_{CELL}* of the cell equals the threshold voltage 501, *V_{T},* and thus the charging power *V_{CELL}*·*I_{CC}* equals the target power *V_{T}*·*I_{CC}.*

The threshold voltage 501, *V_{T}* may comprise 24/27, preferably 22/27, and most preferably 20/27 of a maximum charging voltage 502, *V_{MAX}*, such as *3,6 V* per cell.

For example, in a 2slp battery configuration, the maximum charging voltage 502, *V_{MAX}* and the corresponding threshold voltage 501, *V_{T}* may amount to *2*·*3,6 V* = 7,2 *V* and *2*·*3,6 V·20*/*27* = *5,33 V.*

The constant charging current 601, *Icc* may depend on at least one of a minimum rated capacity of the battery 4, and a production tolerance of the minimum rated capacity.

For example, a minimum rated capacity of a cell of *1,5Ah* and a production tolerance (overcapacity) of +20% amounts to a rated capacity of *1,5Ah... 1,5Ah*·*(1*+*20%)* = *1,5... 1,8Ah.* In connection with an exemplary nominal / working voltage of *3,2V* per cell a rated energy amounts to (*1,5*...*1,8Ah)*·*3,2V* = *4,8... 5,76Wh.* This corresponds to a charging current 6, *I_{CELL}* of *62,5... 75 mA* over a maximum recharge time of *24 h,* or a charging power of *0, 20...0,24W* over *24 h.* As the average voltage 5, *V_{CELL}* of the cell isn't the nominal / working voltage of *3,2V* when charging, the required rated capacity or energy may need to be adjusted to even higher values, such as 5% higher. In any case, CP charging may still result in about 5-7% less peak charging power than CC charging.

The charging current 6, *I_{CELL}* may be equal to or below the threshold current 602, *I_{T}* within a maximum recharge time defined by relevant standards, e.g. 24 hours, responsive to the voltage 5, *V_{CELL}* of the cell being equal to or below the threshold voltage 501, *V_{T}.* In other words, it must not take longer than said maximum recharge time such as *24 h* to fully recharge the battery 4 of an emergency lighting product when recognizing that recharging is necessary (undershoot of threshold voltage 501, *V_{T}*), in accordance with a pertinent standard.

The constant charging current 601, *I_{CC}* may exceed a constant charging current 601, *I_{CC}* of known CC-CV LFP battery chargers, but without exceeding the target power *V_{T}*·*I_{CC}.* This makes sense because when maintaining the requirement of full recharging within the maximum recharge time of e.g. *24 h,* reducing a (maximum) charging power in one phase of a charging procedure requires increasing a charging power in another phase of charging procedure in exchange.

The target power *V_{T}*·*I_{CC}* may depend on the number S of stages. This makes sense because the threshold voltage 501, *V_{T}* itself is proportional to the number S of stages, as already exemplified above: *V_{T}* = *S*·*3,6 V.*

The method 1 further comprises a step of applying 103 a charging current 6, *I_{CELL}* lower than the constant charging current 601, *I_{CC}* to the cell until the voltage 5, *V_{CELL}* of the cell is equal to or above a maximum charging voltage 502, *V_{MAX}.* This may also be taken from the CP charging phase indicated in FIG. 2, where the curve of the charging current 6, *I_{CELL}* decreases from the constant charging current 601, *Icc* until the voltage 5, *V_{CELL}* of the cell equals the maximum charging voltage 502, *V_{MAX}*

The step of applying 103 of the charging current 6, *I_{CELL}* lower than the constant charging current *601, I_{CC}* to the cell may comprise a step of applying 103' a charging current 6, *I_{CELL}* decreasing in dependence of the voltage 5, *V_{CELL}* of the cell in the CP charging phase.

The step of applying 103, 103' of the charging current 6, *I_{CELL}* lower than the constant charging current 601, *I_{CC}* to the cell may comprise a step of applying the target power *V_{T}*·*I_{CC}* to the cell. In other words, a constant target power *V_{T}*·*I_{CC}* may be applied to the cell in the CP charging phase.

The method 1 further comprises a step of applying 104 the maximum charging voltage 502, *V_{MAX}* to the cell until the charging current 6, *I_{CELL}* is equal to or below a threshold current 602, *I_{T}.* This may also be taken from the CV charging phase indicated in FIG. 2, where the applied constant maximum charging voltage 502, *V_{MAX}* results in the charging current 6, *I_{CELL}* decreasing until it equals the threshold current 602, *I_{T}.* This should be the case within the maximum recharge time of e.g. *24 h,* as already explained.

The threshold current 602, *I_{T}* may comprise 3/9, preferably 2/9, and most preferably 1/9 of the constant charging current 601, *I_{CC}.* For example, given a constant charging current 601, *I_{CC}* of *450 mA* (i.e., per parallel branch of the battery configuration), the threshold current 602, *I_{T}* may amount to *1*/*9*·*450 mA = 50 mA.*

The method 1 may further comprise, responsive to the voltage 5, *V_{CELL}* of the cell being equal to or below a further threshold voltage 503, *V_{T2},* triggering 105 the applying 103 of the charging current *6, I_{CELL}* lower than the constant charging current 601, *Icc* to the cell. In other words, if the voltage 5, *V_{CELL}* of the cell decreases to the further threshold voltage 503, *V_{T2},* owing to self-discharge of the cell, recharging is initiated by starting the CP charging phase.

The further threshold voltage 503, *V_{T2}* may comprise 15/18, preferably 16/18, and most preferably 17/18 of the maximum charging voltage 502, *V_{MAX}*. For example, in a 2s1p battery configuration, the further threshold voltage 503, *V_{T2}* may amount to 17/18 · *V_{MAX}* = *17*/*18*·*2*·*3,6 V = 6,8 V.*

FIG. 3 illustrates a battery charger 2 according to a second aspect of the present disclosure.

The battery charger 2 is for a Lithium-based battery 4 comprising a cell.

The battery charger 2 comprises input terminals 201 connected to a source of electrical power, such as the AC power grid indicated in FIG. 2, and output terminals 202 connected to the battery 4. A power converter 203, 204 interconnecting the input terminals 201 and the output terminals 202 is also provided. In the example of FIG. 3, the power converter 203, 204 comprises an AC/DC converter 203 such as a flyback converter at a front-end and supplied via the input terminals 201, and may comprise a DC/DC converter 204 such as a buck converter at a back-end and supplied by the AC/DC converter 203. The DC/DC converter 204 isn't necessarily required as long as battery current and voltage can be sensed and a battery current can be controlled accordingly. The battery 4 is in turn supplied by the DC/DC converter 204 via the output terminals 202. On a low side of the output terminals 202, a resistor is arranged as one of the many possible implementations for current sensing purposes.

With continuing reference to FIG.3, the battery charger 2 further comprises a controller unit 205, such as a microcontroller.

The controller unit 205 is configured to measure a voltage 5, *V_{CELL}* of the cell and/or the battery 4, a charging current 6, *I_{CELL}* of the cell and/or the battery 4, and thus a charging power of the cell and/or the battery 4.

The controller unit 205 is further configured to control the charging current 6, *I_{CELL}* of the cell and/or the battery 4 supplied by the DC/DC converter 204 via the output terminals 202.

As such, the controller unit 205 is configured, responsive to the voltage 5, *V_{CELL}* of the cell being below a threshold voltage 501, *V_{T},* to apply 102 a constant charging current 601, *I_{CC}* to the cell until the charging power *V_{CELL}*·*I_{CC}* is equal to or above a target power *V_{T}*·*I_{CC}.*

The controller unit 205 is further configured to apply 103 a charging current 6, *I_{CELL}* lower than the constant charging current 601, *Icc* to the cell until the voltage 5, *V_{CELL}* of the cell is equal to or above a maximum charging voltage 502, *V_{MAX}*

The controller unit 205 is further configured to apply 104 the maximum charging voltage 502, *V_{MAX}* to the cell until the charging current 6, *I_{CELL}* is equal to or below a threshold current 602, *I_{T}.*

The controller unit 205 may further be configured to carry out the method 1 of the first aspect or any of its embodiments of operating the battery charger 2.

FIG. 3 further illustrates an emergency power supply 3 according to a third aspect of the present disclosure.

The emergency power supply 3 is for an LED lighting system and comprises a Lithium-based battery 4 comprising a cell and a battery charger 2 of the second aspect or any of its embodiments.

## Claims

1. A method (1) of operating a battery charger (2) for a Lithium-based battery (4) comprising a cell (401),
the method (1) comprising
connecting (101) the battery (4) to a powered battery charger (2);
responsive to a voltage (5, *V_{CELL}*) of the cell (401) being below a threshold voltage (501, *V_{T}*), applying (102) a constant charging current (601, *I_{CC}*) to the cell (401) until a charging power (*VC_{ELL}*·*I_{CC}*) is equal to or above a target power (*V_{T}·I_{CC}*);
applying (103) a charging current (6, *I_{CELL}*) lower than the constant charging current (601, *I_{CC}*) to the cell (401) until the voltage (5, *V_{CELL}*) of the cell (401) is equal to or above a maximum charging voltage (502, *V_{MAX}*); and
applying (104) the maximum charging voltage (502, *V_{MAX}*) to the cell (401) until the charging current (6, *I_{CELL}*) is equal to or below a threshold current (602, *I_{T}*).

2. The method (1) of claim 1,
the applying (103) of the charging current (6, *I_{CELL}*) lower than the constant charging current (601, *I_{CC}*) to the cell (401) comprising
applying (103') a charging current (6, *I_{CELL}*) decreasing in dependence of the voltage *(5, V_{CELL}*) of the cell (401).

3. The method (1) of claim 1 or claim 2,
the applying (103, 103') of the charging current (6, *I_{CELL}*) lower than the constant charging current (601, *I_{CC}*) to the cell (401) comprising
applying the target power (*V_{T}*·*I_{CC}*) to the cell (401).

4. The method (1) of any of the preceding claims, further comprising
responsive to the voltage (5, *V_{CELL}*) of the cell (401) being equal to or below a further threshold voltage (503, *V_{T2}*), triggering (105) the applying (103) of the charging current (6, *I_{CELL}*) lower than the constant charging current (601, *I_{CC}*) to the cell (401).

5. The method (1) of claim 4,
the further threshold voltage (503, *V_{T2}*) comprising 15/18, preferably 16/18, and most preferably 17/18 of the maximum charging voltage (502, *V_{MAX}*).

6. The method (1) of any of the preceding claims,
the constant charging current (601, *I_{CC}*) depending on at least one of
a minimum rated capacity of the battery (4), and
a production tolerance of the minimum rated capacity.

7. The method (1) of claim 6,
the constant charging current (601, *I_{CC}*) exceeding a constant charging current of known CC-CV LFP battery chargers.

8. The method (1) of any of the preceding claims,
the threshold current comprising 3/9, preferably 2/9, and most preferably 1/9 of the constant charging current (601, *I_{CC}*).

9. The method (1) of any of the preceding claims,
the threshold voltage (501, *V_{T}*) comprising 24/27, preferably 22/27, and most preferably 20/27 of the maximum charging voltage (502, *V_{MAX}*).

10. The method (1) of any of the preceding claims,
the battery (4) comprising a number (S) of stages in series each having a number (P) of cells (401) in parallel, and
the target power (*V_{T}*·*I_{CC}*) depending on the number (S) of stages.

11. The method (1) of any of the preceding claims,
the charging current (6, *I_{CELL}*) being equal to or below the threshold current (I_{T}) within a maximum recharge time defined by relevant standards responsive to the voltage (5, *V_{CELL}*) of the cell (401) being equal to or below the threshold voltage (501, *V_{T}*).

12. The method (1) of any of the preceding claims,
the Lithium-based battery (4) comprising a Lithium ion cell (401) or a Lithium ferrophosphate (LFP) cell (401).

13. A battery charger (2) for a Lithium-based battery (4) comprising a cell (401), the battery charger (2) comprising
input terminals (201)
connectable to a source of electrical power;
output terminals (202)
connectable to the battery (4);
a power converter (203, 204)
interconnecting the input terminals (201) and the output terminals (202); and
a controller unit (205)
configured to measure a voltage (5, *V_{CELL}*) of the cell (401), a charging current (6, *I_{CELL}*) and a charging power of the battery (4);
configured to, responsive to the voltage (5, *V_{CELL}*) of the cell (401) being below a threshold voltage (501, *V_{T}*), apply (102) a constant charging current (601, *I_{CC}*) to the cell (401) until the charging power is equal to or above a target power (*V_{T}·I_{CC}*);
configured to apply (103) a charging current (6, *I_{CELL}*) lower than the constant charging current (601, *I_{CC}*) to the cell (401) until the voltage (5, *V_{CELL}*) of the cell (401) is equal to or above a maximum charging voltage (502, *V_{MAX}*); and
configured to apply (104) the maximum charging voltage (502, *V_{MAX}*) to the cell (401) until the charging current (6, *I_{CELL}*) is equal to or below a threshold current.

14. The battery charger (2) of claim 13,
the controller unit (205)
further configured to carry out the method (1) of any of the preceding claims of operating the battery charger (2).

15. An emergency power supply (3) for an LED lighting system, comprising
a Lithium-based battery (4) comprising a cell (401); and
a battery charger (2) of claim 13 or claim 14.
